# EUROPÄISCHE PATENTSCHRIFT

(11) **EP 4 275 330 B1**
(45) Veröffentlichungstag und Bekanntmachung des Hinweises auf die Patenterteilung: **24.04.2024**
(21) Anmeldenummer: 22793736.4
(22) Anmeldetag: 28.09.2022
(51) Int. Cl.: H04L 9/40, H04W 12/02, H04W 4/44, G07C 5/00, H04L 67/12

(54) **VERFAHREN ZUR ANONYMEN ÜBERMITTLUNG VON DATEN**
METHOD FOR ANONYMOUSLY TRANSFERRING DATA
PROCÉDÉ DE TRANSMISSION ANONYME DE DONNÉES

(30) Priorität: 01.10.2021 DE 102021004935
(43) Veröffentlichungstag der Anmeldung: 15.11.2023
(73) Patentinhaber: Mercedes-Benz Group AG, 70372 Stuttgart (DE)
(72) Erfinder: KRANZ, Lisa, 71032 Böblingen (DE); BEN SALEM, Haifa, 70191 Stuttgart (DE); NEPP, Benjamin, 71034 Böblingen (DE); GLEMSER, Holger, 70597 Stuttgart (DE); IMHOF, Michael, 71134 Aidlingen (DE); EISELE, Martin, 71116 Gärtringen (DE)
(74) Vertreter: Novagraaf Group
(86) Internationale Anmeldenummer: PCT/EP2022/076886
(87) Internationale Veröffentlichungsnummer: WO 2023/052378

(56) Entgegenhaltungen:
- WO-A1-2019/174887
- Sedafa ET AL: "Selbstdatenschutz im vernetzten Fahrzeug", , 8. August 2017 (2017-08-08), XP055643786, Gefunden im Internet: URL:https://sedafa-projekt.de/media/D2_fin al.pdf [gefunden am 2019-11-19]

## Beschreibung

Die Erfindung betrifft ein Verfahren zur anonymen Übermittlung von Daten eines Fahrzeuges zu einer mit diesem datentechnisch gekoppelten Rechnereinheit, wobei sich das Fahrzeug zur Übermittlung der Daten authentifiziert.

Aus der WO 2010/090664 A1 ist Token-basiertes zentralisiertes Authentifizierungsverfahren zum Bereitstellen des Zuganges zu Benutzerinformationen, die mit einer Benutzerbeziehung mit dem Dienstanbieter verbunden sind, bekannt. Für einen Dienstanbieter umfasst das Authentifizierungsverfahren die Schritte: Authentifizieren eines Benutzers, der ein Benutzertoken an einem Benutzerterminal präsentiert, wobei das Benutzertoken als Benutzeridentifikation darauf gespeichert ist; Ableiten einer Ressourcenkennung unter Verwendung von mindestens zwei Dateneingabeelementen, wobei die mindestens zwei Dateneingabeelemente die Benutzer-ID des Benutzers und eine Dienstanbieter-ID des Dienstanbieters beinhalten, wobei die Benutzerinformationen in einem Speichernetzwerk gespeichert sind und die Ressourcenkennung mit den Benutzerinformationen verknüpft ist; Abrufen der Benutzerinformationen aus dem Speichernetzwerk unter Verwendung der Ressourcenkennung; und Bereitstellen der abgerufenen Benutzerinformationen an den Dienstanbieter.

Die DE 10 2020 007 078 B3 betrifft ein Verfahren zum anonymisierten Übertragen von zeit- und ortsreferenzierten Sensordaten eines Fahrzeuges zu einer fahrzeugexternen Rechnereinheit. Dabei ist vorgesehen, dass während eines Fahrbetriebs eines Fahrzeuges in regelmäßigen zeitlichen Abständen globale Positionsdaten des Fahrzeuges an die Rechnereinheit gesendet werden, wobei nach Aufnahme des Fahrbetriebs des Fahrzeuges ein erstmaliges Senden der Positionsdaten nach dem Ablauf einer zufällig ermittelten Zeitdauer oder nach dem Zurücklegen einer zufällig ermittelten Fahrstrecke seit Aufnahme des Fahrbetriebs erfolgt.

In der DE 10 2016 207 984 B3 wird ein Verfahren zur Übertragung von durch ein fahrendes Fahrzeug erfassten Fahrwegdaten an eine vom Fahrzeug getrennt angeordnete Datenbank beschrieben. Ein Fahrwegdatensatz umfasst dabei Fahrwegdaten sowie einen Ort und einen Zeitpunkt der Erfassung. Die erfassten Fahrwegdatensätze werden in einem Speicher des Fahrzeugs gespeichert. Wenn mindestens die erste Anzahl Fahrwegdatensätze im Speicher vorliegt werden Fahrwegdaten-Nachrichten an die Datenbank gesendet. Eine Fahrwegdaten-Nachricht umfasst dabei Fahrwegdaten und einen zugehörigen Ort der Erfassung. Eine Fahrwegdaten-Nachricht wird zu einem innerhalb eines ersten Zeitintervalls nach der Erfassung der Fahrwegdaten zufällig ausgewählten Zeitpunkt gesendet und/oder wenn das Fahrzeug einen vorbestimmten Radius um den Ort der Erfassung der Fahrwegdaten verlassen hat. Die Nachrichten können unmittelbar an die Datenbank gesendet werden oder über eine Mindestanzahl von Zwischenempfängern, die sich gegenüber dem jeweiligen Empfänger einer von ihnen ausgehenden Übertragung als Ursprung der Daten ausgeben.

Aus der US 2018/0356837 A1 ist ein Netzwerkgerät bekannt, welches Eingaben von einem Bediener empfängt, der Parameter auswählt, welche mit der Ausgabe von mindestens einem Fernsteuerungsbefehl an mindestens ein autonomes Fahrzeug verbunden sind. Basierend auf den ausgewählten Parametern generiert das Netzwerkgerät ein Steuer-Token für ein autonomes Fahrzeug und überträgt das Steuer-Token über ein drahtloses Netzwerk an mindestens ein autonomes Fahrzeug.

Der Erfindung liegt die Aufgabe zugrunde, ein Verfahren zur anonymen Übermittlung von Daten eines Fahrzeuges zu einer mit diesem datentechnisch gekoppelten Rechnereinheit anzugeben.

WO 2019/174887 A1 beschreibt ein Verfahren für eine C2X-Kommunikation von Kraftfahrzeugen eines Kraftfahrzeugverbunds aus mehreren hintereinander fahrenden Kraftfahrzeugen, umfassend die folgenden Schritte:
- Festlegen einer Kraftfahrzeugverbund-Kennung,
- Senden der festgelegten Kraftfahrzeugverbund-Kennung an die Kraftfahrzeuge. so dass als eine Absenderkennung einer eine verkehrsrelevante Information umfassenden C2X-Nachricht, die mittels eines Kraftfahrzeugs des Kraftfahrzeugverbunds an einen vom Kraftfahrzeugverbund entfernten Teilnehmer eines Kommunikationsnetzwerks gesendet werden soll, die empfangene Kraftfahrzeugverbund-Kennung anstelle einer individuellen Kraftfahrzeugkennung eines Kraftfahrzeugs verwendet werden kann.

Sedafa ET AL: "Selbstdatenschutz im vernetzten Fahrzeug", 8. August 2017 (2017-08-08), XP055643786 beschreibt ein Architekturkonzept für Selbstdatenschutz im vernetzten Fahrzeug.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Die Erfindung betrifft ein Verfahren zur anonymen Übermittlung von Daten eines Fahrzeuges zu einer mit diesem datentechnisch gekoppelten Rechnereinheit, wobei sich das Fahrzeug zur Übermittlung der Daten authentifiziert. Es ist vorgesehen, dass sich das Fahrzeug als Client mittels eines oder mehrerer Authentifizierungsverfahren bei einem Token-Server authentifiziert. Mittels des Token-Servers wird die Authentifizierung und Autorisierung des Clients überprüft und wenn der Token-Server ermittelt, dass der Client nicht blockiert ist, wird mittels des Token-Servers ein momentan gültiges Flotten-Token, welches für alle Clients innerhalb einer vorgegebenen Zeitdauer identisch ist, an das Fahrzeug als Client gesendet. Das Fahrzeug wartet dann eine zufällige Zeitdauer innerhalb eines konfigurierbaren Zeitintervalls ab, bevor das Fahrzeug das Flotten-Token zur Übermittlung der Daten an die Rechnereinheit verwendet, so dass eine Korrelation zwischen dem Fahrzeug und den übermittelten Daten über eine Zeitmessung verhindert wird.

Durch Anwendung des Verfahrens ist es möglich, dass das Fahrzeug anonym Daten an die datentechnisch gekoppelte Rechnereinheit übermittelt, wobei weitestgehend sichergestellt wird, dass im Wesentlichen ausschließlich berechtigte Fahrzeuge als Clients Daten an die Rechnereinheit übertragen können.

Zudem können einzelne Fahrzeuge als Clients bei Bedarf bei einer folgenden Token-Rotation blockiert werden und trotz der synchronen Token-Rotation ist eine Last auf den Token-Server, d. h. eine Zeitspanne zur Aktualisierung des Token im Client, verteilt.

Ausführungsbeispiele der Erfindung werden im Folgenden anhand von Zeichnungen näher erläutert.

Dabei zeigen:
- Fig. 1: schematisch ein Sequenzdiagramm eines Verfahrens zur anonymen Übermittlung von Daten eines Fahrzeuges zu einer mit diesem datentechnisch gekoppelten Rechnereinheit und
- Fig. 2: schematisch ein Zeitdiagramm einer Token-Verwendung.

Einander entsprechende Teile sind in allen Figuren mit den gleichen Bezugszeichen versehen.

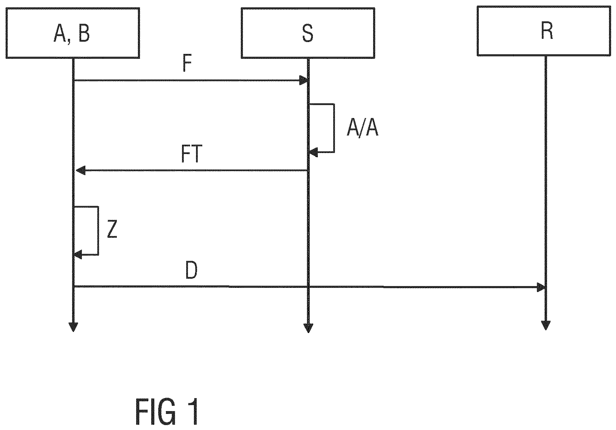

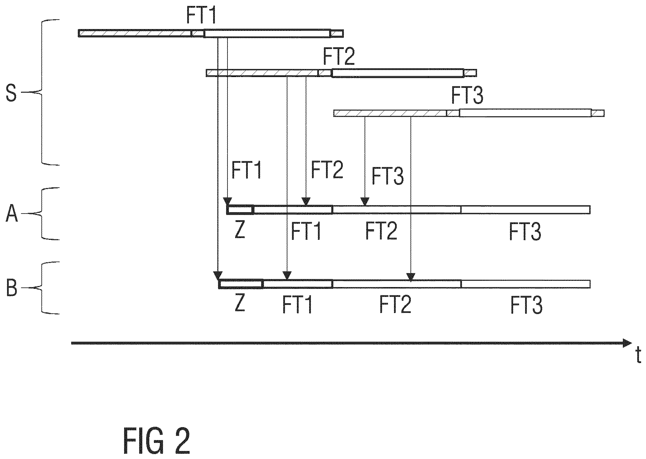

Figur 1 zeigt ein Sequenzdiagramm eines Verfahrens zur anonymen Übermittlung von Daten D eines Fahrzeuges als Client A, B an eine mit dem jeweiligen Fahrzeug datentechnisch gekoppelte Rechnereinheit R und ein Zeitdiagramm einer Token-Verwendung ist in Figur 2 dargestellt.

Clients A, B, insbesondere Fahrzeugen, soll es ermöglicht werden, anonym Daten D an die Rechnereinheit R zu übermitteln, ohne dass die Rechnereinheit R eine Möglichkeit hat, die Identität des jeweiligen Clients A, B festzustellen. Dennoch muss sichergestellt werden können, dass nur berechtigte, also autorisierte, Clients A, B Daten D übermitteln können und einzelne Clients A, B bei Bedarf, beispielsweise aufgrund eines Hackerangriffes, blockiert werden können.

Zur anonymen Übermittlung von Daten D von einem Client A, B zu einer Rechnereinheit R wird ein im Folgenden beschriebenes Verfahren vorgeschlagen, welches es zudem ermöglicht, einzelne Clients A, B bei Bedarf zu blockieren.

Das Verfahren sieht vor, dass das jeweilige Fahrzeug als Client A, B eine Anfrage F für ein Flotten-Token FT1 mit clientbezogener Authentifizierung bei einem Token-Server S stellt. Daraufhin authentifiziert sich der Client A, B mit einer oder mehreren clientbezogenen Authentifizierungsverfahren, z. B. Shared Secret, Client Zertifikat oder mittels clientbezogenen Token.

Mittels des Token-Servers S wird dann die Authentifizierung und Autorisierung A/A des Clients A, B überprüft. Wird bei der Überprüfung, beispielsweise mittels einer Blacklist oder Whitelist, ermittelt, dass der die Anfrage F stellende Client A, B in Bezug auf eine Datenübermittlung nicht blockiert ist, erhält der Client A, B ein momentan gültiges Flotten-Token FT1. Dieses von dem entsprechenden Client A, B erhaltene Flotten-Token FT1 ist für alle Clients A, B, beispielsweise für alle Fahrzeuge einer Fahrzeugflotte, innerhalb einer vorgegebenen Zeitdauer identisch. D. h., dass sich die von dem jeweiligen Client A, B erhaltenen Flotten-Token FT1 auch nicht in Bezug auf Ablaufzeit und/oder Signatur unterscheiden.

Der Client A, B in Form eines Fahrzeuges wartet dann eine zufällige Zeitdauer Z innerhalb eines konfigurierbaren Zeitintervalls ab, bevor das Fahrzeug das Flotten-Token FT1 zur Übermittlung der Daten D an die Rechnereinheit R verwendet, so dass eine Korrelation zwischen dem Fahrzeug und den übermittelten Daten D über eine Zeitmessung weitestgehend verhindert werden kann.

Bevor eine Gültigkeit des momentan gültigen Flotten-Tokens FT1 abgelaufen ist, aber nachdem ein neues Flotten-Token FT2 durch den Token-Server S zur Verfügung gestellt wird, holt sich der jeweilige Client A, B, wie oben beschrieben, das neue Flotten-Token FT2 ab. Der Client A, B holt sich also vor Ablauf des momentan gültigen Flotten-Tokens FT1 ein neues Flotten-Token FT2 durch verteilte, synchrone Token-Rotation. Das momentan gültige Flotten-Token FT1 wird aber bis zum Beginn einer Gültigkeit, also einer Verwendungszeit, des neuen Flotten-Tokens FT2 weiterverwendet.

Alle Clients A, B, d. h. alle Fahrzeuge, die autorisiert sind, Daten D an die Rechnereinheit R zu übermitteln, wechseln gleichzeitig zu Beginn der Gültigkeit des neuen Flotten-Tokens FT2 auf dieses.

In Figur 2 ist anhand von zwei Clients A, B beispielhaft die Verwendung von Flotten-Token FT1 bis FT3 in Bezug auf die Zeit t dargestellt.

Dabei ist die mittels des Token-Servers S vorgegebene Gültigkeit des jeweiligen Flotten-Tokens FT1 bis FT3 anhand einer Schraffur gezeigt.

In Bezug auf den jeweiligen Client A, B ist die jeweils zufällige Zeitdauer Z, welche eine Wartezeit darstellt, und anschließend die Verwendung des jeweiligen Flotten-Tokens FT1 bis FT3 zur anonymen Übermittlung der Daten D der beiden Clients A, B in Form der Fahrzeuge, die einer Fahrzeugflotte angehören, dargestellt.

## Patentansprüche

1. Verfahren zur anonymen Übermittlung von Daten (D) eines Fahrzeuges zu einer mit diesem datentechnisch gekoppelten Rechnereinheit (R), wobei sich das Fahrzeug zur Übermittlung der Daten (D) authentifiziert, wobei
- sich das Fahrzeug als Client (A, B) mittels eines oder mehrerer Authentifizierungsverfahren bei einem Token-Server (S) authentifiziert,
- mittels des Token-Servers (S) die Authentifizierung und Autorisierung (A/A) des Clients (A, B) überprüft wird,
- wenn der Token-Server (S) ermittelt, dass der Client (A, B) nicht blockiert ist, mittels des Token-Servers (S) ein momentan gültiges Flotten-Token (FT1 bis FT3), welches für alle Clients (A, B) innerhalb einer vorgegebenen Zeitdauer identisch ist, an das Fahrzeug als Client (A, B) gesendet wird,
- das Fahrzeug eine zufällige Zeitdauer (Z) innerhalb eines konfigurierbaren Zeitintervalls abwartet, bevor das Fahrzeug das Flotten-Token (FT1 bis FT3) zur Übermittlung der Daten (D) an die Rechnereinheit (R) verwendet, so dass eine Korrelation zwischen dem Fahrzeug und den übermittelten Daten (D) über eine Zeitmessung verhindert wird, wobei Clients (A, B) alle Fahrzeuge einer Fahrzeugflotte sind, die autorisiert sind, Daten (D) an die Rechnereinheit zu übermitteln.

2. Verfahren nach Anspruch 1,
**dadurch gekennzeichnet, dass** sich das Fahrzeug vor Ablauf der vorgegebenen Zeitdauer und nachdem ein neues Flotten-Token (FT2, FT3) durch den Token-Server (S) zur Verfügung gestellt wird, zu einem zufälligen Zeitpunkt das neue Flotten-Token (FT2, FT3) abholt, wobei das Flotten-Token (FT1) bis Ablauf seiner Gültigkeit verwendet wird.

3. Verfahren nach Anspruch 1 oder 2,
**dadurch gekennzeichnet, dass** alle Clients (A, B) zu Beginn einer Verwendungszeit des neuen Flotten-Tokens (FT2, FT3) gleichzeitig zur Verwendung des neuen Flotten-Token (FT2, FT3) wechseln.

## Claims

1. Method for anonymously transmitting data (D) from a vehicle to a computer unit (R) coupled by data links to said vehicle, the vehicle authenticating itself in order to transmit the data (D), wherein
- the vehicle authenticates itself as a client (A, B), by means of one or more authentication methods, with a token server (S),
- the authentication and authorization (A/A) of the client (A, B) is checked by means of the token server (S),
- if the token server (S) determines that the client (A, B) is not blocked, a currently valid fleet token (FT1 to FT3), which is identical for all clients (A, B) within a predetermined period of time, is sent to the vehicle as a client (A, B),
- the vehicle waits for a random period of time (Z) within a configurable time interval before the vehicle uses the fleet token (FT1 to FT3) to transmit the data (D) to the computer unit (R), so that a correlation between the vehicle and the transmitted data (D) via a time measurement is prevented, wherein clients (A, B) are all vehicles of a vehicle fleet that are authorized to transmit data (D) to the computer unit.

2. Method according to claim 1, **characterized in that** the vehicle picks up the new fleet token (FT2, FT3) at a random point in time before the predetermined time period expires and after a new fleet token (FT2, FT3) is made available by the token server (S), wherein the fleet token (FT1) is used until its validity expires.

3. Method according to either claim 1 or claim 2, **characterized in that** all clients (A, B) simultaneously change to using the new fleet token (FT2, FT3) at the beginning of a usage time of the new fleet token (FT2, FT3).

## Revendications

1. Procédé permettant de transmettre de manière anonyme des données (D) d'un véhicule à une unité de calcul (R) couplée par la technique des données à celui-ci, le véhicule s'authentifiant pour la transmission des données (D), dans lequel
- le véhicule s'authentifie comme client (A, B) à l'aide d'un ou de plusieurs procédés d'authentification auprès d'un serveur de jetons (S),
- l'authentification et l'autorisation (A/A) du client (A, B) sont vérifiées à l'aide du serveur de jetons (S),
- lorsque le serveur de jetons (S) détermine que le client (A, B) n'est pas bloqué, un jeton de flotte (FT1 à FT3) momentanément valable, qui est identique pour tous les clients (A, B) pendant une durée temporelle prédéfinie, est envoyé au véhicule comme client (A, B) à l'aide du serveur de jetons (S),
- le véhicule attend pendant une durée temporelle aléatoire (Z) dans un intervalle temporel configurable avant que le véhicule n'utilise le jeton de flotte (FT1 à FT3) pour la transmission des données (D) à l'unité de calcul (R), en sorte qu'une corrélation entre le véhicule et les données (D) transmises par l'intermédiaire d'une chronométrage est empêchée, les clients (A, B) étant tous des véhicules d'une flotte de véhicules qui sont autorisés à transmettre des données (D) à l'unité de calcul.

2. Procédé selon la revendication 1, **caractérisé en ce que** le véhicule, avant la fin de la durée temporelle prédéfinie et après la mise à disposition d'un nouveau jeton de flotte (FT2, FT3) par le serveur de jetons (S), récupère le nouveau jeton de flotte (FT2, FT3) à un moment aléatoire, le jeton de flotte (FT1) étant utilisé jusqu'à la fin de sa validité.

3. Procédé selon la revendication 1 ou 2, **caractérisé en ce que** tous les clients (A, B) basculent concomitamment sur l'utilisation du nouveau jeton de flotte (FT2, FT3) au début d'un temps d'utilisation du nouveau jeton de flotte (FT2, FT3).
